Europäisches Patentamt

European Patent Office

Office européen des brevets

(11) Publication number: **0 140 697**
**B1**

# EUROPEAN PATENT SPECIFICATION

(45) Date of publication of patent specification: **04.01.89**

(51) Int. Cl.⁴: **H 02 P 6/02**

(21) Application number: **84307424.6**

(22) Date of filing: **29.10.84**

(54) Method for positioning starting point of direct current brushless motor.

(30) Priority: **01.11.83 JP 203626/83**

(43) Date of publication of application:
**08.05.85 Bulletin 85/19**

(45) Publication of the grant of the patent:
**04.01.89 Bulletin 89/01**

(84) Designated Contracting States:
**DE FR GB**

(56) References cited:
**DE-A-2 246 543**
**DE-A-2 647 956**

**PATENT ABSTRACTS OF JAPAN, vol. 9, no. 56
(E-302)1779r, 12th March 1985; & JP - A - 59 -
194692 (OKI DENKI KOGYO) 05-11-1984**

(73) Proprietor: **Oki Electric Industry Company,
Limited
7-12, Toranomon 1-chome Minato-ku
Tokyo 105 (JP)**

(72) Inventor: **Tanuma, Jiro Oki Electric Ind. Co., Ltd.
7-12, Toranomon 1-chome Minatoku
Tokyo (JP)**
Inventor: **Uchida, Takao Oki Electric Ind. Co.,
Ltd.
7-12, Toranomon 1-chome Minatoku
Tokyo (JP)**
Inventor: **Hayashi, Kunihal Oki Electric Ind. Co.,
Ltd.
7-12, Toranomon 1-chome Minatoku
Tokyo (JP)**

(74) Representative: **Knott, Stephen Gilbert et al
MATHISEN, MACARA & CO. The Coach House
6-8 Swakeleys Road
Ickenham Uxbridge Middlesex UB10 8BZ (GB)**

Courier Press, Leamington Spa, England.

## Description

The present invention relates to a method for positioning the starting point of a direct current brushless motor used for a moving body for which movement from a fixed position is required, such as a carriage of a printer.

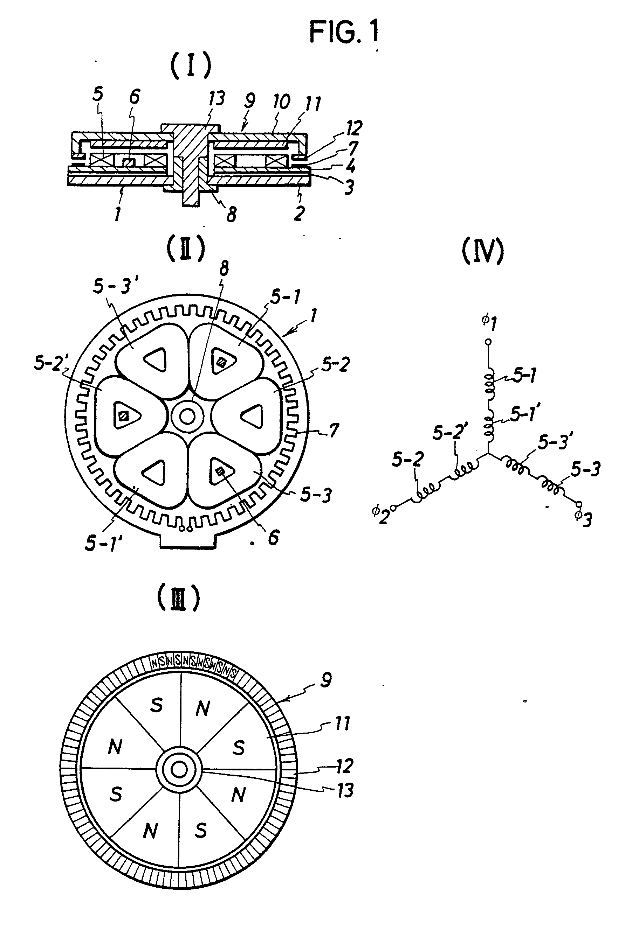

The structure of a conventional direct current brushless motor of this type (see also DE—A—2647956) is illustrated in Figures 1-(I) through 1-(IV). In the drawings, reference numeral 1 represents a stator, and a substrate 4 is arranged on a stator yoke 2 formed of a magnetic material through an insulating plate 3 and a plurality of armature coils 5 are mounted on the substrate 4. Hall elements 6 are arranged in the central portions of predetermined armature coils 5, and a speed-detecting pattern 7 (Hereinafter referred to as "FG pattern") is formed on the substrate 4 to surround the armature coils 5.

As shown in Figure 1-(IV), the armature coils 5 include six coils 5-1, 5-2, 5-3, 5-1', 5-2' and 5-3' arranged on a circle, and they are connected in three phases ($\phi 1$, $\phi 2$ and $\phi 3$), as shown in Figure 1-(IV). Three hall elements 6 are connected so that the phases deviate from one another by 120°.

Reference numeral 8 represents a bearing arranged in the central portion of the stator 1 and this bearing 8 rotatably supports a shaft of a rotor described below.

Reference numeral 9 represents a rotor, and as shown in Figure 1-(III), on a rotor yoke 10 formed of a magnetic material a disk-like magnet 11 having 8 fan-shaped equal N and S poles arranged alternately and an annular magnet 12 having N and S poles arranged alternately at the same pitch as that of the FG pattern 7 are attached and a shaft 13 is arranged in the central portion of the rotor yoke 10. The magnet 11 confronts the armature coils 5 of the stator 1 and the magnet 12 confronts the FG pattern 7.

The operation principle of the above-mentioned conventional motor will now be described in brief. The position of the rotor 9 is detected from the detection outputs of the three hall elements 6, and an electric current at this position is applied to the armature coils 5, the armature coils 5 receive a current force according to the Fleming's left-hand law. However, since the armature coils 5 are secured, a reaction force acts on the magnet 11 and the rotor 9 is rotated. When the rotor 9 is rotated, an alternating current is induced in the FG pattern 7 by the annular magnet 12. This alternating current is converted to pulses, and by measuring the pulse width, that is, the frequency of the induced current, acceleration, deceleration and constant speed can be controlled.

As is apparent from the foregoing description, detection of the position and detection of the speed are performed in the conventional direct current brushless motor, and therefore, four kinds of signals are adopted and the number of circuit elements and parts is increased, with the result that deviations are brought about among the hall elements 6 and a problem of an attachment error is caused when the motor is assembled.

Moreover, since the hall elements 6 are arranged in the central portions of the armature coils 5, it is impossible to sufficiently wind coil wires on the inner sides of the armature coils 5 and no sufficient torque can be obtained or the assembling operation becomes complicated.

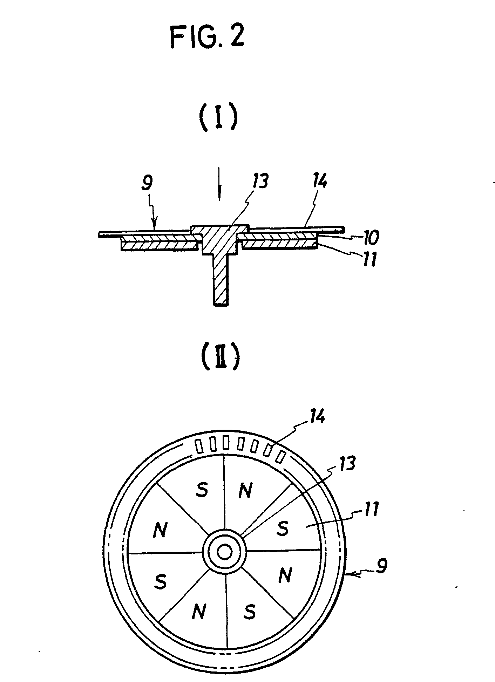

As means for eliminating the foregoing defects, we already proposed a method for driving a direct current brushless motor, in which position-detecting elements are removed and control is performed only by speed-detecting elements, as described hereinafter with reference to Figures 2 through 6.

Referring to Figures 2-(I) and 2-(II), a rotor 9 comprises a rotor yoke 10, a magnet 11, a shaft 13 and a speed-detecting slit 14. A stator 1 is the same as the stator shown in Figure 1-(II) except that the hall elements 6 and FG pattern 7 are removed. Accordingly, the stator 1 is not shown in the drawings.

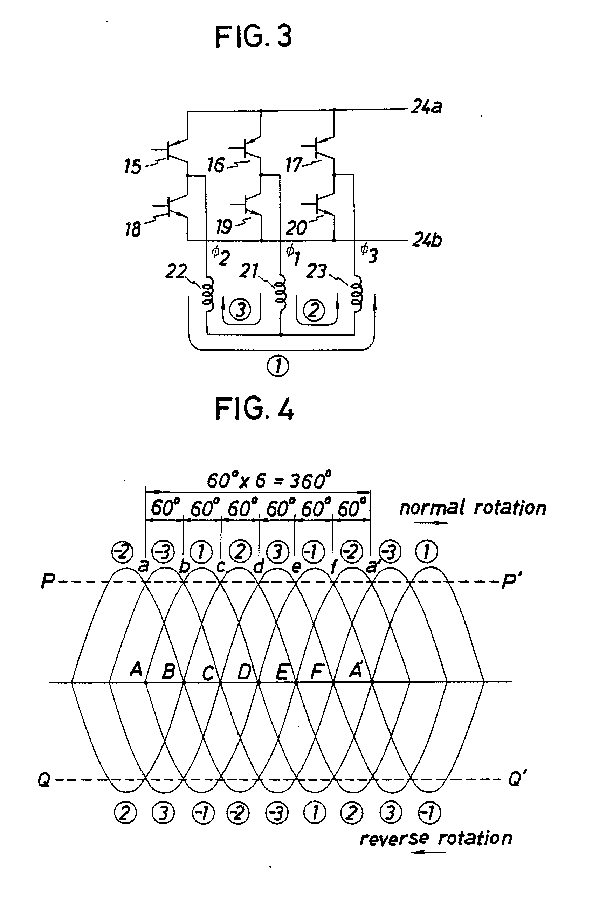

Figure 3 is a simple circuit diagram showing a three-phase motor. In Figure 3, reference numerals 15 through 20 represent transistors and reference numerals 21 through 23 represents armature coils. The armature coil 21 corresponds to the armature coils 5-1 and 5-1' in Figure 1, the armature coil 22 corresponds to the armature coils 5-2 and 5-2' in Figure 1, and the armature coil 23 corresponds to the armature coil 5-3 and 5-3' in Figure 1. Reference numeral 24a represents a positive terminal of the power source and reference numeral 24b represents a negative terminal of the power source.

In case of two-phase excitation, the directions of currents applied to the armature coils 21 through 23 are 6 directions, that is, directions (1), (2) and (3) in Figure 3 and opposite directions (−1), (−2) and (−3). Wave forms of output torques obtained when constant currents of the directions of arrows (1), (2), (3), (−1), (−2) and (−3) are applied to the armature coils 21, 22 and 23 are shown in Figure 4.

In Figure 4, a, b, c, d, e, f and a' indicate crossing points of the respective output torque wave forms with dot line P—P', and A, B, C, D, E, F and A' indicate the positions of the rotor 9 generating the torques of the points a, b, c, d, e, f and a', respectively.

These six wave forms are analogues to one another and deviate from one another by an electric angle of 60°, and if the directions of the electric currents are changed by 60°, for example, to the direction (−3) at the point a toward the point b, to the direction (1) at the point b toward the point c or to the direction (2) at the point c toward the poind d, an output having a smallest ripple is obtained above the dot line P—P' and the rotor 9 is rotated in the normal direction (clockwise rotation seen from the direction of the arrow in Figure 2-(I)). In case of the reverse rotation (counterclockwise rotation), the portion below the dot line Q—Q' is utilized.

When electric currents are changed over by every 60° of the electric angle, changeover is effected 6 times in one cycle (a to a'). Furthermore, this one cycle corresponds to the pitch of the N and S poles of the magnet and, as is seen from Figure 2-(II), one rotation of the rotor 9 corresponds to 4 cycles. Accordingly, changeover of the electric current should be performed 24 times (=6×4) during one rotation of the rotor 9. Supposing that the speed-detecting slit 14 is divided into 96 segments, during the period of one application of the electric current, for example, between the points a and b, 4 pulses (96÷24) appear, or 8 bit informations of 0 or 1 appear.

At the time of starting, the positional relationship of the magnet 11, that is, the rotor 9, to the armature coils 21 through 23 is defined by any one of the points A through A' in Figure 4. Accordingly, if the electric current is first supplied in the direction (1) and a sufficient time is allowed to elapse for stopping the magnet 11 and if the electric current is then supplied in the direction (2) and a sufficient time is similarly allowed to elapse, even if the balanced state is attained at the point A (or the point A') when the electric current is supplied in the direction (1) or even if the locked state is attained at the point D, by supplying the electric current in the direction (2), the locked state can be attained at the point E.

If the above-mentioned structure is adopted, if the electric current is applied in the order of (1)→(2), the position of the magnet 11 is set at the point E irrespectively of the position of the magnet 11 at the time of starting. Therefore, if the motor is driven in the normal direction, the electric current is applied in the order of (−1)→(−2)→(−3)→(1)→(2)→(3)→(−1) . . ., and if the motor is driven in the reverse direction, the electric current is applied in the order of (−3)→(−2)→(−1)→(3)→(2)→(1)→(−3) . . . The timing of changeover of the electric current is set so that the changeover is effected every time 4 pulses or 8 bits of the output from the speed-detecting slit 14 continue.

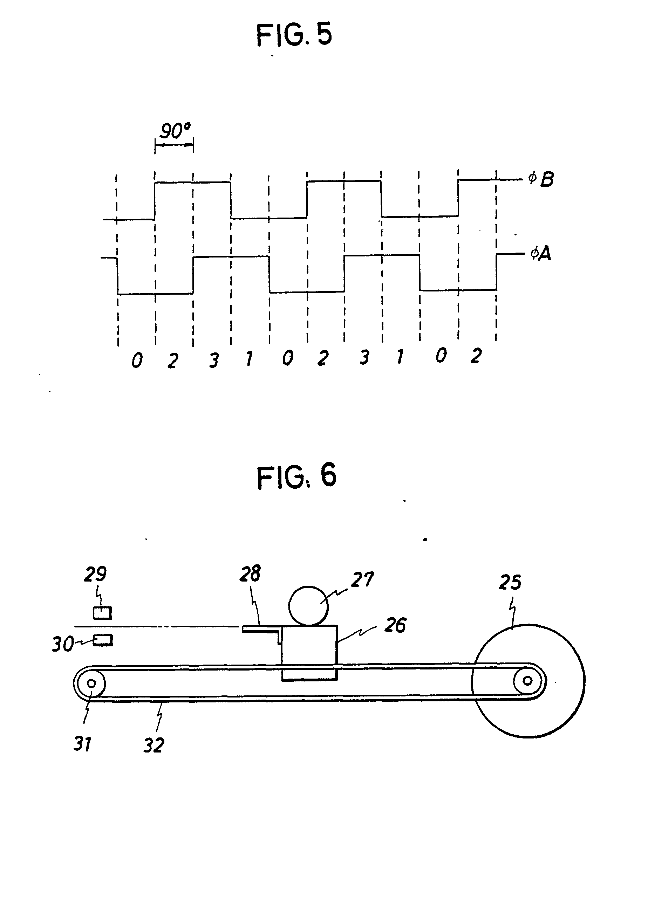

The method for rotating the motor in the normal and reverse directions will now be described. In order to detect the rotation direction, the speed detector elements of the speed-detecting slit 14 are devitated from one another by 90° of the electric angle, and in this case, detection outputs φA and φB are as shown in Figure 5 and the detector outputs are indicated in a digital manner by values shown in the lower part of Figure 5 by using the two bits φA and φB (φB=Most Significant Bit, φA=Least Significant Bit).

Supposing that the normal rotation is indicated by the change of 0→2→3→1→0 . . . in the digital output values of the speed detector, the reverse rotation is indicated by the change of 0→1→3→2→0 . . . Accordingly, supposing that the speed-detecting slit 14 is the same as the slit 14 described above, the timing of changeover of the electric current is determined by 16 wave form amplifier output values (=4 pulses×4). In this driving method, the first setting is the same as described above. Accordingly, explanation of the first setting is omitted.

The method for changing over the rotation direction will now be described with reference to Figure 4. When driving is started in the normal rotation direction, the direction of the electric current opposite to the direction of the electric current for the normal rotation direction is prepared as an information for the reverse rotation direction. For example, when the electric current is supplied in the direction (2) as the electric current for the normal rotation direction, the electric current flowing in the direction (−2) is prepared as the information for the reverse rotation direction.

The outputs of the speed detector are counted, and increment is effected in case of the normal rotation direction and when the count number is increased to 16 the number is returned to 0. In case of the reverse rotation direction, decrement is effected and when the count number is reduced to 0, the number is returned to 16.

Supposing that the rotation direction is changed over at the point F in Figure 4, the electric current in the direction (3) is caused to flow at the point D, and then, the output of the detector is detected. At the point E, the current (−1) for the normal rotation direction and the current (1) for the reverse rotation direction are prepared while the current (3) is actually kept flowing. When the locked state is brought about at the point F and the motor is stopped, the prepared current (1) for the reverse rotation direction is supplied to drive the motor. Even when the point F is passed, if only the output of the detector is assuredly detected, the information (−2) for the subsequent normal rotation direction and the information (2) the reverse rotation direction are prepared, and hence, dislocation is not caused.

If the above operation is continuously performed, control of the position of the rotor can be accomplished even when hall elements 6 are not disposed.

Control of the speed may be performed in the same manner as in the conventional method.

Positioning of the starting point of the rotor 9 can be accomplished in the above-mentioned manner even without using hall elements 6 for detecting the position. However, it was found that the above-mentioned method still involves points on which improvements should be made.

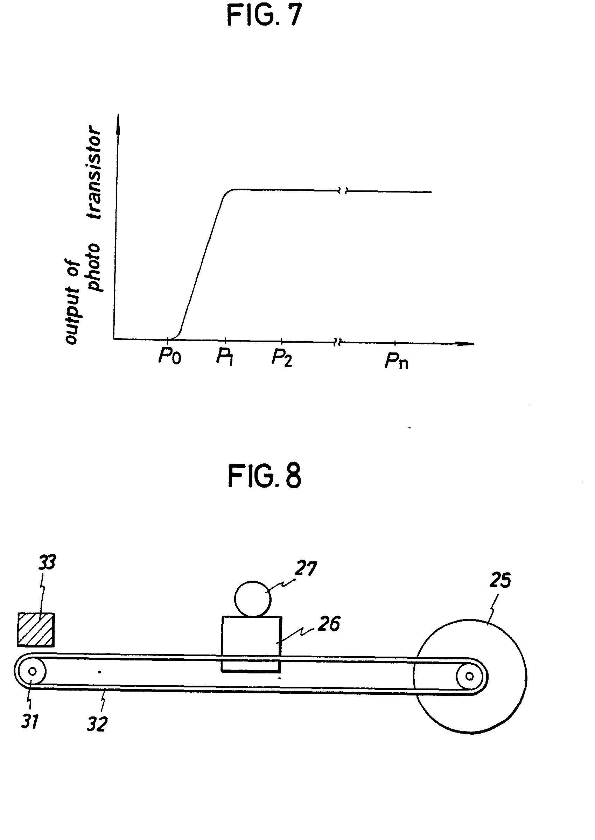

The desired improvements will now be described with reference to Figure 6 and 7.

Referring to Figure 6, reference numeral 25 represents a direct current brushless motor having no hall elements and reference numeral 26 represents a carriage as a moving body, and a printing head 27 is loaded on the carriage 26 and a light-intercepting plate 28 is arranged on one side of the carriage 26. Reference numeral 29 represents a light emission diode, reference numeral 30 represents a photo transistor, reference numeral 31 represents a pulley, and reference numeral 32 represents a driving belt wound between the pulley 32 and the direct current brushless motor 25.

The light emission diode 29 and the photo transistor 30 for receiving the light from the light emission diode 29 are arranged on the left end of the moving passage for the carriage 26 so that the diode 29 and photo transistor 30 confront each other. When the direct current brushless motor 25 is driven and the carriage 26 is moved to the left through the driving belt 32, the light-intercepting plate 28 mounted on the carriage 26 intercepts the light of the light emission diode 29.

The relation between the photo transistor 30 and the operation pitch of the carriage 26 is illustrated in Figure 7, in which the ordinate indicates the output of the photo transistor 30 and stable stop positions $P_0$ through $P_n$ are plotted on the abscissa. As is seen from Figure 7, in the region of from $P_n$ to $P_1$, the output of the photo transistor is kept constant, but when the carriage is moved from the point $P_1$ to $P_0$, since the light-intercepting plate 28 intercepts the light of the light transmission diode 29, the output is zero between these points. Accordingly, the point $P_0$ is regarded as the standard point.

In this method, however, since the torque is small in the vicinity of the stop position of the direct current brushless motor 25, it is impossible to stop the rotor 9 precisely at the stop point against the mechanical friction force, and this positioning error is left even after positioning of the starting point. This causes not only the deviation of the starting point but also the occurrence of a relatively large torque ripple.

Moreover, since the light emission diode 29 and the photo transistor 30 are used for positioning of the starting point, the output of the photo transistor 30 is readily reduced by dusts or oils and in an extreme case, no output is obtained, resulting in reduction of the reliability. Still further, since the light emission diode and light receiving transistor are used, provision of an amplifier and the like becomes necessary and reduction of the cost is difficult.

It is a primary object of the present invention having the above-mentioned structure to provide a direct current brushless motor in which the phase adjustment can be performed precisely without using starting point detecting elements such as a light transmission diode and a light receiving transistor or hall elements.

The method of the present invention concerns brushless motor having the above mentioned structure wherein a stopper is arranged at a predetermined position so that rotation of a rotor of a direct current brushless motor is stopped at a maximum torque position or at a position close to the maximum torque position, and when rotation of the rotor of the direct current brushless motor is stopped by the stopper, the count value of a counter for counting output pulses from a speed detector is reset at a set value corresponding to said predetermined position and the rotor is rotated in the reverse direction to locate the motor at a stable stop position.

Brief description of the drawings

Figure 1 illustrates the structure of a conventional direct current brushless motor, in which (I) is a sectional view, (II) is a plane view of a stator, (III) is a plane view of a rotor and (IV) is a wiring diagram of armature coils.

Figure 2 illustrates the structure of a direct current brushless motor used in the present invention, in which (I) is a sectional view of a rotor and (II) is a plane view of the rotor.

Figure 3 is a circuit diagram of a 3-phase motor.

Figure 4 is a diagram showing the output torque wave form of the 3-phase motor shown in Figure 3.

Figure 5 is a diagram illustrating the operation of a speed-detecting slit which is able to judge the direction in the direct current brushless motor shown in Figure 2.

Figure 6 is a schematic diagram illustrating a conventional method for positioning the starting point by using the direct current brushless motor shown in Figure 2.

Figure 7 is a characteristic curve illustrating the relation between the output of a light receiving transistor and a light-intercepting plate in the method shown in Figure 6.

Figure 8 is a diagram illustrating an embodiment of the method for positioning the starting point of a direct current brushless motor according to the present invention.

Figure 9 is a diagram illustrating the output torque wave form and driving state in the present invention.

Figure 10 is a block diagram illustrating a printer control circuit to which the present invention is applied.

One embodiment of the present invention having the above-mentioned object will now be described in detail with reference to the accompanying drawings.

Figure 8 is a diagram illustrating the method for positioning the starting point of a direct current brushless motor according to the present invention. In Figure 8, reference numeral 25 represents a direct current brushless motor, reference numeral 26 represents a carriage, reference numeral 27 represents a printing head, reference numeral 31 represents a pulley and reference numeral 32 represents a driving belt, and these members are the same as those shown in Figure 6. The structure of the direct current brushless motor will be described in brief again. The direct current brushless motor 25 comprises a rotor 9 as shown in Figures 2-(I) and 2-(II) and a stator 1 as shown in Figure 1-(II), in which the hall elements 6 and FG pattern 7 are removed.

In the present invention, the light-intercepting plate 28, light emission diode 29 and photo transistor 30 shown in Figure 6, which are used in the conventional method, are not necessary, but a stopper 33 is additionally arranged on the left end of the moving passage of the carriage 26, strictly at the position of 1/2 of the stable stop position pitch of the rotor 9.

Incidentally, the stopper 33 is arranged as one independent member in this embodiment, but the stopper 33 may be formed integrally with a shaft of the pulley 31 or the like.

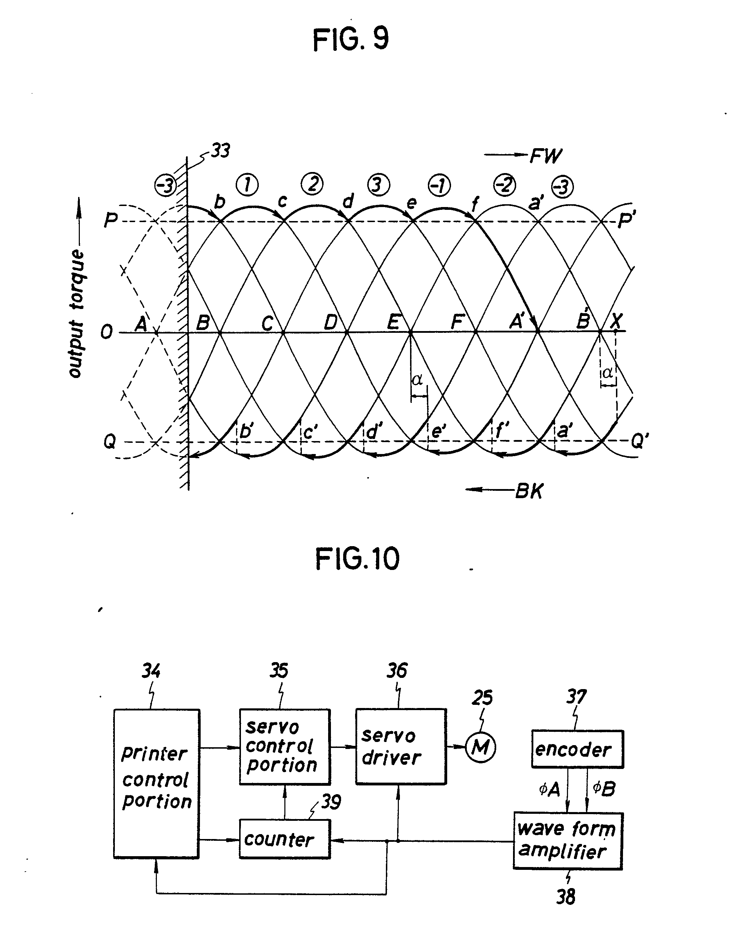

The operation principle of the present invention will now be described with reference to Figures 8 and 9. As shown in the drawings, the stopper 33 is set at the position of 1/2 of the stable stop position pitch A, B, . . ., that is, at the point of the maximum value in the torque wave form. In Figure 9, the stopper 33 is located at the position of 1/2 of the pitch A—B on the electric current (−3). Of course, the stopper 33 may be set at any of six 1/2-pitch positions shown in Figure 9.

Figure 10 is a block diagram illustrating a printer control system to which the present invention is applied. A servo control portion 35 forms phase signal based on a signal from a printer control portion 34 and a signal from a counter 39, and a servo driver 36 is driven by this phase signal to cause an electric current to flow in the direct current brushless motor 25. When the rotor 9 of the direct current brushless motor 25 is thus rotated, position signals $\phi A$ and $\phi B$ are put out from an encoder 37 and the position signal $\phi A$ and $\phi B$ are converted to pulse signals indicating the moving direction in a wave form amplifier 38. These pulse signals are given to the servo driver 36 for the speed control and the counter 39 for the current changeover, respectively.

The counter 39 is an n-coded up-down counter which is turned up on receipt of a pulse signal from a wave shaping circuit 38, for example, a pulse signal in the direction FW in Figure 9 and turned down on receipt of a pulse signal in the direction BK (n=N/24-1 in which N stands for number of pulses per rotation of the direct current brushless motor). When the value is changed to 0 from n in case of "UP" or when the value is changed to n from 0 in case of "DOWN", the counter 39 gives a changeover signal to the servo control portion 35. Furthermore, the value of the counter 39 may optionally be set in the range of from 0 to n based on signals from the printer control portion 34.

At the time of starting the direct current brushless motor 25, the phase is forcible determined in the servo control portion 35 by the signal from the printer control portion 34 and the electric current is caused to flow so that the rotor 9 will be set at the point B′ in Figure 9, but the rotor stops at the point X deviated from the point B′ by $\alpha$ in the direction FW. Since this error $\alpha$ cannot be confirmed by the printer control portion 34, the value of the counter 39 is reset at 0 as a temporary starting point, and electric currents are caused to flow in the order of (3)→(2)→(1) .... However, since the current changeover is determined by the counter 39, the changeover is always effected by a deviation of $\alpha$. Accordingly, the torque of the direct current brushless motor 25 includes a large ripple in the direction BK as indicated by a thick arrow in Figure 9. The carriage 26 impinges against the stopper 33 in this state, and the current (3) is caused to flow in Figure 9 and rotation of the rotor 9 of the direct current brushless motor 25 is stopped at the position of the maximum torque, that is, at the middle between the points A and B. Accordingly, the mechanical friction can be neglected and positioning can be performed precisely.

On the other hand, in the printer control portion 34, impingement of the carriage 26 against the stopper 33 can be detected when the stop signal from the encoder 37 by stopping of rotation of the rotor 9 is not put in for a time exceeding a certain limit, and at this point, the standard point position of the carriage 32 is set. Then, in order to correct the phase of the direct current brushless motor 25, the value of the counter 39 is reset at n/2, and electric currents are applied in the order of (−3)→(1)→(2) ... in the direction FW and the rotor 9 is stopped at the position A′ of the starting point.

The phase error $\alpha$ before impingement of the carriage 26 to the stopper 33 is reduced to 0 by setting the value of the counter 39 at n/2 at the time of impingement. The reason is that since the stopper 33 is located at 1/2 between the points A and B and the value of the counter is 0 at the point A and n at the point B, the ideal value of the counter 39 at the position of 1/2 between the points A and B is n/2.

By this correction the torque of the direct current brushless motor 25 is converted to an ideal torque indicated by a thick arrow in the direction FW in Figure 9. Accordingly, a signal forcibly producing the phase (−1) is put out from the printer control portion 34 so that the phase is not changed to (−2) even if a phase changeover signal is emitted from the counter 39, and if this signal is transmitted to the servo control portion 35, the rotor can be stopped at the point A′. Also when the stopper is stopped at the point A′, an error of the stop position is similarly generated by the mechanical friction as at the time of starting. However, since the starting point in this case is set at the point of impingement of the carriage 26 against the stopper 33 as pointed out hereinbefore, the error of the stop position can be detected by the printer control portion 34 and no trouble takes place.

As is apparent from the foregoing description, according to the present invention, by arranging the stopper at the point of 1/2 of the stable stop position pitch of rotation of the rotor and correcting the count value of the counter by impingement of the carriage against this stopper, the phase adjustment of the direct current brushless motor and setting of the absolute position of the rotor can be accomplished. Accordingly, the starting point can be positioned without using starting point detecting elements such as a light emission diodes and a photo transistor and hall elements, which are indispensably used in the conventional methods, and therefore, effects of enhancing the reliability and reducing the cost can be attained.

The present invention can be applied to not only a carriage of a printer as mentioned above but also any other moving body for which movement from the fixed position is required, and the above-mentioned effects can be similarly attained.

## Claims

1. A method of positioning the starting point of a direct current brushless motor (25) which comprises the step of moving a moving body (26) by means of said direct current brushless motor comprising stator including a plurality of armature coils secured on a stator yoke (2) through a substrate (4), a disk-like rotor magnet (11) having N and S poles arranged alternately in the circumferential direction, said magnet being arranged to confront the armature coils, and a rotatable rotor (9) having a speed-detecting slit (14) on its rim, said brushless motor obtaining a rotating power by applying an electric current corresponding to the magnetic pole to the magnet to each armature coil and changing excitation phases with every count of a definite number of pulses by means of a counter (39), said pulses being put out from a speed detector (37) which detects the speed-detecting slit (14) and puts out a frequency pulse signal proportional to the speed, wherein a stopper (33) is arranged at a predetermined position of a maximum torque of the direct current brushless motor or a predetermined position of close to the maximum torque position, and when the direct current brushless motor is driven and the moving body impinges against the stopper to stop rotation of the rotor, the count number in the counter is reset at a value corresponding to said predetermined position and the rotor is then rotated in the reverse direction to locate the motor at a stable stop position, whereby the starting point of the direct current brushless motor is positioned.

2. A method of positioning the starting point of a direct current brushless motor as claimed in Claim 1 wherein the position of stopper is controllable.

## Patentansprüche

1. Verfahren zum Einstellen des Startpunktes eines bürstenlosen Gleichstrommotores (25), der den Verfahrensschritt des Bewegens einer Fahrvorrichtung (26) mittels des bürstenlosen Gleichstrommotors enthält, der einen Stator aufweist, mit einer Vielzahl von Rotorwicklungen, die auf einem Statorjoch (2) durch ein Substrat (4) befestigt sind, mit einem scheibenförmigen Rotormagnet (11), der N- und S-Pole aufweist, die wechselweise in Umfangsrichtung angeordnet sind, wobei der Magnet so angeordnet ist, daß er den Rotorwicklungen gegenübersteht und mit einem drehbaren Rotor (9), der einen Geschwindigkeits - Ermittlungsspalt (14)-auf seinem Rand aufweist, wobei der bürstenlose Motor eine Drehkraft durch Anwendung eines elektrischen Stromes erreicht, der dem magnetischen Pol des Magneten einer jeden Rotorwicklung entspricht und der sich ändernde Erregungsphasen mit jeder Zählung einer bestimmten Anzahl von Impulsen mittels eines Zählers (39) erreicht, wobei die Impulse von einem Geschwindigkeitsdetektor (37) stammen, der den Geschwindigkeits - Ermittlungsspalt (14) überwacht und der ein Frequenzimpulssignal proportional zur Geschwindigkeit abgibt, wobei eine Bremse (33) bei einer vorbestimmten Position eines maximalen Drehmomentes des bürstenlosen Gleichstrommotors oder bei einer vorbestimmten Position nahe der maximalen Drehmomentstellung angeordnet ist, und wenn der bürstenlose Gleichstrommotor angetrieben wird und die Fahrvorrichtung auf die Bremse auftrifft, um die Drehung des Rotors zu stoppen, wird die gezählte Zahl im Zähler bei einem bestimmten Wert zurückgestellt, der der vorbestimmten Position entspricht und der Rotor wird dann in umgekehrter Richtung gedreht, um den Motor bei einer festen Stopp-Position zu positionieren, wobei der Startpunkt des bürstenlosen Gleichstrommotors eingestellt wird.

2. Verfahren zum Einstellen des Startpunktes eines bürstenlosen Gleichstrommotors wie er in Anspruch 1 beansprucht ist, wobei die Position der Bremse steuerbar ist.

## Revendications

1. Méthode de positionnement du point de démarrage d'un moteur à courant continu sans balais (25), dans laquelle on déplace un corps mobile (26) au moyen dudit moteur à courant continu sans balais, lequel comprend un stator incluant une pluralité d'enroulements d'armature fixés à une carcasse statorique (2) par l'intermédiaire d'un substrat (4), un aimant rotorique du genre disque (11) ayant des pôles N et S agencés en alternat sur la direction circonférentielle, ledit aimant étant agencé de manière à être en vis-à-vis des enroulements d'armature, et un rotor tournant (9) dont le bord comporte une fente (14) pour détection de vitesse, ledit moteur sans balais recevant de l'énergie de rotation par application, à chaque enroulement d'armature, d'un courant électrique correspondant au pôle magnétique de l'aimant, et en changeant des phases d'excitation à chaque compte d'un nombre défini d'impulsions par un compteur (39), lesdites impulsions étant émises par un détecteur de vitesse (37) qui détecte la fente pour détection de vitesse (14) et émet un signal impulsionnel à fréquence proportionnelle à la vitesse, méthode dans laquelle un arrêtoir (33) est agencé à une position prédéterminée d'un couple maximal du moteur à courant continu sans balais, ou à une position prédéterminée proche de la position de couple maximal, et lorsque le moteur à courant continu sans balais est entraîné et que le corps mobile rencontre l'arrêtoir pour arrêter la rotation du moteur, le nombre compté dans le compteur est remis à une valeur correspondant à ladite position prédéterminée, et le rotor est alors entraîné en rotation dans le sens inverse, pour positionner le moteur à une position d'arrêt stable, le point de démarrage du moteur à courant continu sans balais étant ainsi positionné.

2. Méthode de positionnement du point de démarrage d'un moteur à courant continu sans balais, telle que revendiquée dans la revendication 1, dans laquelle la position de l'arrêtoir peut être commandée.

# FIG. 1

## ( I )

## ( II )

## ( III )

## ( IV )

# FIG. 2

## (I)

## (II)

## FIG. 3

## FIG. 4

# FIG. 5

# FIG. 6

# FIG. 7

# FIG. 8

# FIG. 9

# FIG.10